**Europäisches Patentamt**

**European Patent Office**

**Office européen des brevets**

(19)

(11) Veröffentlichungsnummer : **0 056 610**
**B1**

(12) **EUROPÄISCHE PATENTSCHRIFT**

(45) Veröffentlichungstag der Patentschrift :
28.12.83

(21) Anmeldenummer : **82100184.9**

(22) Anmeldetag : **13.01.82**

(51) Int. Cl.³ : **C 12 G 1/02, B 65 D 88/02,
B 01 F 15/00**

(54) **Liegender Behälter zur Behandlung von Weinmaische.**

(30) Priorität : **19.01.81 DE 3101510**

(43) Veröffentlichungstag der Anmeldung :
**28.07.82 Patentblatt 82/30**

(45) Bekanntmachung des Hinweises auf die Patenterteilung : **28.12.83 Patentblatt 83/52**

(84) Benannte Vertragsstaaten :
**AT CH FR IT LI**

(56) Entgegenhaltungen :
**AT-A- 326 074**
**BE-A- 639 068**
**GB-A- 2 020 612**
**US-A- 2 653 724**

(73) Patentinhaber : **Rieger, Herbert**
**Talstrasse 33**
**D-7121 Ingersheim (DE)**

(72) Erfinder : **Rieger, Herbert**
**Talstrasse 33**
**D-7121 Ingersheim (DE)**

(74) Vertreter : **Patentanwälte Kohler - Schwindling -
Späth**
**Hohentwielstrasse 41**
**D-7000 Stuttgart 1 (DE)**

Liegender Behälter zur Behandlung von Weinmaische

Die Erfindung betrifft einen liegenden tankartigen Behälter zur Behandlung von Weinmaische, insbesondere Gärtank, mit einem um eine zu einer Längsachse parallellen Achse drehbaren, mehrere über die Länge der Rührwerkswelle verteilt und im Abstand voneinander angeordnete Rührflügel aufweisenden Rührwerk.

Beim Gären von Rotweinmaische bildet sich ein oben auf der Flüssigkeit schwimmender, fester Tresterkuchen. Es hat sich herausgestellt, daß die Qualität des Rotweins verbessert wird, wenn der Saft eine bestimmte Zeit lang in inniger Berührung mit den Trestern ist. Eine derartige Durchmischung wurde bisher lediglich bei liegenden, oben offenen Tanks dadurch bewerkstelligt, daß ein Arbeiter mit einer Stange oder einem Rechen den Tresterkuchen durchstochen und versucht hat, ihn nach unten zu drücken, was jedoch nur bei oben offenen Tanks möglich und überdies recht schwierig ist, weil der während der Gärung sich bildende Tresterkuchen sehr fest ist. Auch bei der Behandlung von anderen Arten von Maische, beispielsweise Weißweinmaische, kann es wünschenswert sein, die gesamte Maische, also einschließlich der Trester, zu durchmischen.

Der Erfindung liegt daher die Aufgabe zugrunde, diese innige Verbindung zwischen Saft und Trester herzustellen, und zwar so, daß sowohl die zeitliche Dauer dieser Durchmischung als auch die Heftigkeit der Durchmischung genau dosierbar ist.

Diese Aufgabe wird erfindungsgemäß dadurch gelöst, daß ein, vorzugsweise ein äußerer, Abschnitt der parallel zur Rührwerksachse verlaufenden Querschnittsfläche der Rührwerksflügel wesentlich breiter als hoch ist.

Dabei können bei Ausführungsformen der Erfindung die Rührwerksflügel über ihre ganze Länge plattenartig ausgebildet sein oder aber nur die Abschnitte im Bereich der freien Enden breiter sein als der Flügel auf seiner restlichen Länge. Diese Flügel zerbrechen den Tresterkuchen. Ihre flachen Abschnitte nehmen bei ihrem Auftauchen aus dem Saft Stücke des Tresterkuchens mit nach oben und drücken diese Stücke auf der gegenüberliegenden Seite nach unten in den Saft, so daß ein stetiges Heben und Senken der Trester und damit ein gutes Durchmischen der Trester mit dem Saft stattfindet.

Zwar ist aus der AT-A-326 074 bereits ein nach oben offener Maischeentsaftungsbehälter bekannt, in dessen Achse eine Welle mit Armen drehbar angeordnet ist, die Welle dient jedoch als Schlägerwelle und die Arme sind deswegen stabförmig ausgebildet, um nach Ablassen des Saftes den verklebten Tresterkuchen, insbesondere dessen Brückenbildung über eine Austragsschnecke zu zerschlagen.

Das Zerschlagen des Tresterkuchens ist notwendig, um ein Austragen der Tresterstücke über eine Schnecke aus dem Behälter zu ermöglichen. Ein behutsames Anheben des Tresterkuchens und Hinabdrücken auf der anderen Seite, um eine innige Durchmischung zwischen Trester und Saft zu bewirken, ist mit der bekannten Anordnung nicht möglich, da einmal die stabartige Ausbildung der Arme eine derartige Durchmischung nicht ermöglicht und zum anderen die genannten Arme nicht in den Bereich hineinreichen, in dem ein auf dem Saft schwimmender Tresterkuchen sich befindet. Die Lage der Arme bei der bekannten Einrichtung ist vielmehr auf die Verhältnisse abgestellt, die bei Entsaftungsbehältern vorliegen, bei denen der Saft durch einen seitlich angeordneten Saftraum abgeführt wird, während bei dem erfindungsgemäß verwendeten Behälter der Saft bestimmungsgemäß bei den Trestern verbleibt.

Schließlich ist aus der BE-A-639 068 noch eine Einrichtung zum Mischen von Asphalt bekannt, bei der in einem zylinderförmigen Behälter eine axiale Welle vorgesehen ist, die mit Endplatten versehene elastische Arme trägt. Diese Anordnung ist jedoch auf die beim Durchmischen von Asphalt vorliegenden Verhältnisse abgestellt, sie soll in dem Bodenbereich des kreiszylindrischen Behälters sich ansammelnde, feste Bestandteile, beispielsweise Kieselsteine, nach oben fördern. Dies wird durch die geometrischen Abmessungen der Platten erreicht, die diesen Bodenbereich abstreifen. Außerdem sind besondere Vorkehrungen getroffen, um die elastischen Arme so schmal wie möglich zu halten. Dem Mischvorgang sollen allein die Platten am Ende der elastischen Arme dienen.

Die FR-B-72 45 498 zeigt schließlich noch propellerartig angestellte Mischflügel, die die Trester in Längsrichtung eines Behälters transportieren.

Der erfindungsgemäße liegende Tank kann unterschiedliche Querschnittsformen aufweisen, er kann beispielsweise rechteckig sein oder aber in seiner oberen Hälfte und im oberen Teil der unteren Hälfte einen kreiszylindrischen Querschnitt haben, an dem sich dann eine Ablaufrinne mit trichterförmigem Querschnitt anschließt. Bei einer Ausführungsform der Erfindung weist der Tank jedoch einen kreiszylindrischen Querschnitt auf und am unteren.

Ende des liegenden Behälters ist eine Austragschnecke angeordnet. Auch kann die Schnecke in der Ablaufrinne oder einer unten an den kreisförmigen Querschnitt angesetzten Rinne angeordnet sein.

Diese Ausführungsformen der Erfindung haben den Vorteil, daß die breiten Mischflügel beim Entleeren des Tanks eine weitere Aufgabe erfüllen, nämlich daß sie den Tankinhalt der Austragschnecke zuführen und eine Brückenbildung der Trester oberhalb der Schnecke verhindern.

Bei Ausführungsformen der Erfindung kann die Rührwerkswelle zentrisch in dem Behälter angeordnet sein. Bei anderen Ausführungsformen der Erfindung kann sie exzentrisch angeordnet, beispielsweise etwas tiefer gesetzt sein. In diesem Falle ist der Abstand der Flügelenden von der Innenwand längs des Umfanges des Rührwerks verschieden. Da der Abstand der Flügelspitzen von der Behälterinnenwand im untersten Teil des Behälters und im Bereich der Förderschnecke am kleinsten ist, ist bei dieser Anordnung der Rührwerkswelle unterhalb der Symmetrieachse des Behälters der Vorteil besonders ausgeprägt, daß das Rührwerk beim Entleeren des Behälters die Trester in den Bereich der Austragschnecke einarbeitet.

Bei dieser Ausführungsform mit unterhalb der Symmetrieachse gelagerter Rührwerkswelle kann ohne weiters in Kauf genommen werden, daß der Abstand der Flügelenden von der Behälterwand im obersten Bereich des Tanks relativ groß ist. Zum einen wird beim Gären von Rotweinmaische der Behälter nicht ganz voll gefüllt, in der Regel sogar nur bis zu 70 %, weil beim Gären die Trester aufquellen und den Restraum ausfüllen. Zum anderen wird der sich oben auf dem Saft ansammelnde Tresterkuchen auch dann in einzelne Stücke zerteilt, die durch den Flügel nach unten in den Saft eingedrückt werden, wenn die Flügel nicht ganz bis nach oben reichen. Bei der Behandlung von Weißweinmaische wird zwar der Tank vollständig oder nahezu vollständig mit Maische gefüllt, aber auch in diesem Falle wird eine genügend gute Durchmischung erreicht, auch wenn die Mischflügel nicht in den obersten Bereich des Tanks hineinreichen.

Es ist bereits erwähnt worden, daß die breiten Mischflügel noch den Vorteil haben, daß sie beim Entleeren des Tanks den Tankinhalt der Austragschnecke zuführen. Darüberhinaus eröffnen die breiten Mischflügel die Möglichkeit, diese Mischflügel im Randbereich so stark zu verbreitern, daß diese Funktion des Zuführens des Tankinhalts zu der Austragschnecke lückenlos längs des ganzen Tanks erfolgt. Zu diesem Zweck können bei einer Ausführungsform der Erfindung die freien Enden der längs der Rührwerkswelle gegeneinander versetzt angeordneten Mischflügel so stark verbreitert sein, daß die Flügelenden aneinandergereiht sich über die ganze Länge des Tanks erstrecken.

Die breiten Mischflügel eröffnen weiter die Möglichkeit, bei einer Ausführungsform, bei der die Rührwerkswelle zentrisch in dem runden Behälter angeordnet ist, die Mischflügelenden soweit zu verlängern, daß sie bis nahe an der Innenwand verlaufen, wobei dann auf den Enden Abstreifer aus elatischem Werkstoff, beispielsweise aus Kunststoff oder Gummi, befestigt sind, die an der Innenwand anliegen. Auf diese Weise schaben die Mischflügel die kreiszylindrische Innenfläche des Behälters ab, wobei die Elastizität der Abstreifer die Maßänderungen ausgleicht, die die Behälterwand bei verschiedener Belastung oder bei Temperaturschwankungen erleidet.

Anstelle einer Verbreiterung der Flügelenden können bei anderen Ausführungsformen der Erfindung die Flügelenden von zwei auf der Rührwerkswelle um den gleichen Winkel versetzt angeordneten Rührflügeln durch einen Steg verbunden sein, der ebenfalls einen Abstreifer aus elastischem Material trägt, der die Innenwand des Behälters berührt und dort befindliche Trester in den Bereich der Austragschnecke transportiert.

Bei Ausführungsformen der Erfindung sind die Rührflügel um 180° gegeneinander versetzt. Bei dieser Ausführungsform stehen sich daher zwei dieser Rührflügel stets genau diametral gegenüber. Sind diese Rührflügel dann durch die vorerwähnten Stege miteinander verbunden, so überlappen sich die Bahnen der die Behälterinnenwand abstreifenden Schaber. Diese Ausführungsform hat den besonderen Vorteil, daß zum Reinigen des Behälters die Rührwerkswelle so gestellt werden kann, daß die Rührwerksflügel senkrecht nach oben und unten stehen. Die nach unten ragenden Rührwerksflügel befinden sich also im Bereich der Ablaufrinne und an ihre Flügelspitzen schließt sich ein freier Raum an. Außer dem obersten Punkt der Behälterwand ist die gesamte Behälterwand in dieser Stellung ohne Behinderung durch die Rührwerksflügel frei zugänglich.

Bei anderen Ausführungsformen der Erfindung können die Flügel auch um einen anderen Winkel gegeneinander versetzt sein. Zum Beispiel können die Rührflügel entlang der Rührwerksachse schraubenlinienartig um insgesamt 360° versetzt, also in ähnlicher Weise angeordnet sein wie die Stufen einer Spindeltreppe. Der Vorteil dieser Ausführungsform der Erfindung besteht darin, daß nicht mehrere Rührflügel gleichzeitig in Kontakt mit dem Tresterkuchen kommen, sondern zu unterschiedlichen Zeiten das größte Drehmoment ausüben, so daß harte Stöße auf die Lagerung der Rührwerkswelle vermieden sind und ein Antriebsaggregat relativ kleiner Leistung für das Rührwerk verwendet werden kann.

Die Rührwerksflügel können in radialer Richtung von der Rührwerkswelle abstehend und gerade angeordnet sein oder aber auch im Winkel zum Radius stehend oder abgeknickt oder abgebogen sein, um bei geeigneter Drehrichtung dem Mischgut zusätzlich eine radial nach innen, in manchen Fällen auch eine radial nach außen gerichtete Bewegung zu erteilen.

In der Zeichnung sind Ausführungsformen der Erfindung dargestellt. Es zeigen :

Figur 1 eine Vorderansicht eines ersten Ausführungsbeispiels eines Behälters,

Figur 2 einen Schnitt des Behälters nach Fig. 1 entsprechend der Linie II-II,

Figuren 3a und 3b Ausführungsformen von Rührflügeln,

Figur 4 ein weiteres Ausführungsbeispiel eines Behälters,

Figur 5 eine Ausführungsform eines Rührflügels in Draufsicht,

Figur 6 einen der Fig. 2 entsprechenden Schnitt einer anderen Ausführungsform.

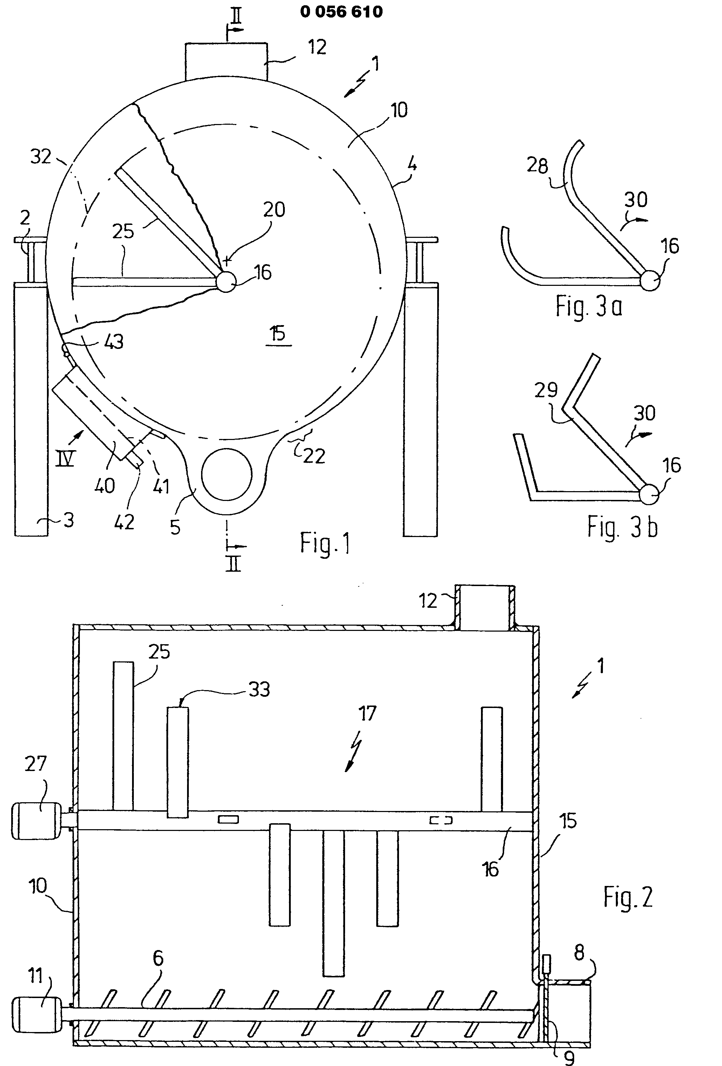

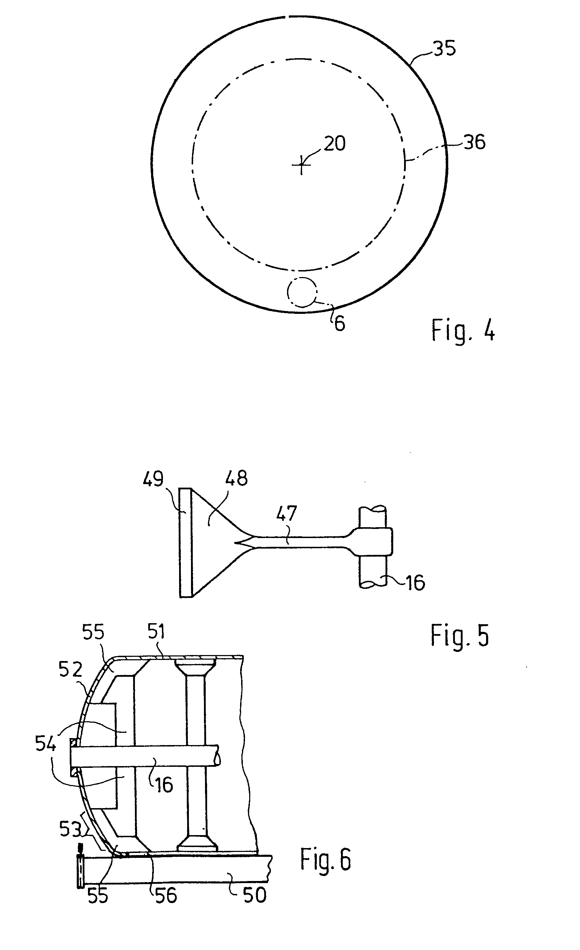

In den im wesentlichen nur den Querschnitt des jeweiligen Behälters zeigenden Fig. 1 und 4 sind außerdem noch die Rührwerksachsen und schematisch die Rührwerkskreise, also die äußerste Begrenzung des vom Rührwerk erfaßten Raumes angedeutet.

In Fig. 1 und 2 ist ein Behälter 1 von im wesentlichen kreiszylinderischem Querschnitt mit waagrechter Längsachse, also liegend, angeordnet. Die den Behälter 1 auf dem Fußboden abstützende Stützkonstruktion enthält Träger 2 und Stützen 3. Am unteren Bereich des kreiszylinderischen Mantels 4 des Behälters 1 ist eine sich über die gesamte Länge des Behälters erstreckende Auslaufrinne 5 vorgesehen, in der eine Austrag- oder Förderschnecke 6 angeordnet ist, durch die die wenig fließfähigen Teile des Behälterinhalts durch einen in Verlängerung der Förderschnecke 6 liegenden Auslaufstutzen 8 herausgefördert werden können, wenn ein nur angedeutet dargestellter Schieber 9 geöffnet ist. Die Förderschnecke 6 wird an ihrem dem Auslaufstutzen 8 abgewandten Ende, das über die Rückwand 10 des Behälters 1 hinausragt, durch eine Antriebsvorrichtung, im Ausführungsbeispiel durch einen Elektromotor 11, angetrieben. Die Förderschnecke 6 liegt außerhalb des Kreiszylinders, der auf dem größten Teil seines Umfangs durch den Mantel 4 gebildet wird. An der Oberseite des Behälters 1 ist ein Einfüllstutzen 12 vorgesehen.

In der Rückwand 10 und der Vorderwand 15 des Behälters 1, die in der Regel in nicht gezeichneter Weise gewölbt verlaufen, ist die Welle 16 eines Rührwerkes 17 gelagert, wobei die Drehachse der Welle 16 und somit die Achse des Rührwerks 17 waagrecht verläuft und von der Achse 20 des zylindrischen Mantels 4 einen Abstand hat, und zwar verläuft die Welle 16 genau unterhalb der Achse 20. Dieser Abstand zwischen Welle 16 und Achse 20 ist so gewählt, daß unter Berücksichtigung der radialen Abmessungen des Rührwerks in einer Zone 22 des zylinderischen Mantels 4, die nahe der Ablaufrinne 5 liegt, ein vorbestimmter Mindestabstand zwischen dem radial am weitesten nach außen ragenden Teil des Rührwerks 17 und dem Mantel 4 besteht. Dieser Mindestabstand kann je nach Verwendungszweck des Behälters und auch den bei der Herstellung zu erwartenden Toleranzen und eventuell während des Betriebs zu erwartenden Verformungen der Welle 16 unterschiedlich gewählt sein, dieser Abstand kann insbesondere in einem Bereich von etwa 5 mm und 150 mm liegen. Von dieser Zone 22 aus nach oben erweitert sich der Abstand zwischen dem radial äußersten Ende des Rührwerks und der Innenseite des Mantels 4, bis dieser Abstand im Bereich des oberen Scheitels des Behälters 4 sein Maximum erreicht hat. Im Beispiel der Fig. 1 beträgt dieser Abstand im Bereich des oberen Scheitels des Behälters 1 etwa 15 bis 20 % des Durchmessers des zylindrischen Teils des Behälters 1.

Das von der Antriebsvorrichtung 27 angetriebene Rührwerk 17 weist auf der Welle 16 mehrere in axialem Abstand angeordnete Rührwerksarme 25 auf, die alle die gleiche radiale Länge haben und die in Umfangsrichtung der Welle 16 längs einer Schraubenlinie versetzt angeordnet sind.

In dem gezeichneten Beispiel ist die schraubenlinienartige Versetzung insgesamt über einen Winkel von nahezu 360° vorhanden, so daß bei den im Ausführungsbeispiel vorgesehenen acht Rührwerksarmen 25 nach jeweils einer Drehung von 45° einer der Rührwerksarme 25 genau noch oben weist. Je mehr Rührwerksarme auf einer einzigen derartigen, 360° beschreibenden Schraubenlinie angeordnet sind, umso gleichmäßiger ist die von der Antriebsvorrichtung 27 des Rührwerks zu seinem gleichbleibend schnellen Durchdrehen erforderliche Kraft, wenn sich im oberen Bereich des Innenraums des Behälters 1 ein relativ fester Tresterkuchen abgesetzt hat, der dem Eindringen der Rührwerksarme einen erheblichen Widerstand entgegensetzt.

Die Rührwerksarme 25 sind im Ausführungbeispiel der Fig. 1 und 2 plattenartig ausgebildet, wobei diese Platten eben sind und die Ebene der Platten parallel zur Achsrichtung der Welle 16 und radial zu dieser verläuft. Diese Form der Rührwerksarme 25 ist in Fig. 1 an einer Stelle, an der die Vorderwand 15 abgebrochen dargestellt ist, zeichnerisch angedeutet. Es wäre auch möglich und könnte im Einzelfall vorteilhaft sein, die Rührwerksarme 25 zwar weiterhin plattenförmig auszubilden, sie jedoch zumindest in ihrem äußeren Endbereich in Richtung ihrer Drehbewegung zu krümmen oder zu knicken, wie dies in Fig. 3a bei den dort gezeigten Rührwerksarmen 28 und in Fig. 3b bei den dort gezeigten Rührwerksarmen 29 der Fall ist. In beiden Fig. 3a und 3b ist durch einen Pfeil 30 die Drehrichtung des Rührwerks angedeutet. Zur Vereinfachung der Zeichnung sind in diesen Figuren lediglich zwei Rührwerksarme dargestellt.

Durch die geschilderte Abkrümmung oder Abknickung im Endbereich bewirken diese Rührwerksarme eine Förderung der mit den äußeren Teilen der Rührwerksarme in Berührung kommenden Teile des Behälterinhalts in einer Richtung etwa radial nach innen, so daß hierdurch insbesondere die Durchmischung der oben auf dem Saft schwimmenden Rotweintrester mit dem Saft begünstigt werden kann. In Fig. 1 ist noch der Umfangskreis 32 eingezeichnet, den die äußeren Enden 33 aller Rührwerksarme 25 in der Blickrichtung der Fig. 1 gesehen beschrieben. Bei der in Figur 4 gezeigten Anordnung sind nicht mehr die einzelnen Rührwerksarme dargestellt, sondern lediglich der Umfangskreis des Rührwerks.

Nahezu im unteren Bereich des zylindrischen Mantels 4 ist in der Darstellung der Fig. 1 links von der Ablaufrinne 5 eine sich über einen erheblichen Teil der Länge des Behälters 1 erstreckende Saftkammer 40 im Bereich einer Aussparung des Mantels 4 angeordnet. Die Saftkammer 40 weist in ihrem Inneren im Abstand von der durch den Mantel 4 gebildeten Zylinderfläche ein Schlitzblech 41 auf, das dem Saft den Durchtritt gestattet, aber die Trester zurückhält. Der Saft kann aus der Saftkammer 40 durch einen Abfluß 42 fließen und durch geeignete Leitungen abgeleitet werden.

Bei der in Fig. 4 dargestellten Ausführungsform weist der liegende Behälter einen rechtwinklig zu seiner Rührwerksachse 20 kreisförmigen Querschnitt auf. Die Rührwerkswelle ist zentrisch, also in der Symmetrieachse 20, angeordnet, der Umfangskreis des Rührwerkes ist mit 36 bezeichnet. Unten in dem Behälter ist die Austragschnecke 6 vorgesehen, die Rührwerksflügel 25, 28, 29 sind zumindest um den Durchmesser der Austragschnecke 6 kürzer als der Radius der zylindermantelförmigen Wand 35 des Behälters.

Bei Ausführungsformen der Erfindung sind die Rührwerksflügel auf der Rührwerkswelle nicht schraubenlinienförmig versetzt angeordnet, sondern um 180° gegeneinander versetzt. Insbesondere bei dieser Ausführungsform können zwei in gleicher Winkelstellung auf der Rührwerkswelle angeordnete Rührflügel an ihrem äußeren Ende durch einen Steg miteinander verbunden sein.

Die Rührwerksarme können auch eine andere als die dargestellte Form aufweisen. Insbesondere ist es möglich, die in Fig. 2 sichtbare Breite der Rührwerksflügel im wesentlichen nur in dem Endbereich der Rührwerksflügel vorzusehen, sie aber in ihrem radial mittleren Bereich 47 schmäler, z. B. mit rundem Querschnitt, vorzusehen. Auch können die in Fig. 2 dargestellten Rührwerksflügel an ihren Enden parallel zur Welle 16 verlaufende Arme tragen oder sonstwie verbreitert sein, beispielsweise so, daß die Flügelenden 48 nebeneinander angeordnet sich über die ganze Länge des zylindermantelförmigen Teils des Behälters erstrecken.

Es ist bereits darauf hingewiesen worden, daß bei der Ausführungsform nach Fig. 1 der Abstand der Rührwerksflügelenden von der Behälterwand in dem Bereich 22 am geringsten ist. Im Bereich dieser dichtesten Annäherung der Rührwerksflügel an die Behälterwand können diese auch die Innenwand abstreifen, so daß in diesem Bereich 22, in dem die Behälterwand verhältnismäßig flach verläuft, sich keine Trester absetzen können, sondern diese von den Rührwerksflügeln erfaßt und in den Bereich der Austragschnecke 6 gefördert werden. Die Abstreifwirkung der Rührwerksflügel kann dadurch verstärkt werden, daß an den Rührflügelenden an Stegen zwischen mit gleichem Winkel auf der Welle 16 befestigten Rührflügeln oder entsprechend der Ausführungsform nach Fig. 5 Abstreifer 49 aus einem elastischen Werkstoff, beispielsweise Gummi oder Kunststoff, befestigt sind, die an der Innenwand des Behälters entlanggleiten. Bei diesen Ausführungsformen der Erfindung ist die Austragschnecke wie in Fig. 1 dargestellt, in einer Ablaufrinne 5 außerhalb des Umfangskreises des Rührwerkes angeordnet. Bei der Ausführungsform, bei der die Rührflügelenden Abstreifer tragen, kann die Rührwerkswelle 16 zentrisch in der Symmetrieachse 20 des Behälters angeordnet sein, in welchem Falle die Abstreifer an der gesamten zylindrischen Innenfläche der Behälterwand entlanggleiten. Bei anderen Ausführungsformen ist die Rührwerkswelle 16 unterhalb der Symmetrieachse 20 angeordnet, wie in Fig. 1 dargestellt, der Abstreifeffekt beschränkt sich in diesem Falle auf den in Fig. 1 eingezeichneten Bereich 22.

Wenn das Rührwerk lediglich die oben auf dem Saft schwimmenden Trester teilen und in den Saft eintauchen soll, kann das Rührwerk mit einer sehr langsamen Geschwindigkeit von vielleicht 1/2 bis 20 Umdrehungen pro Minute bei einem Rührwerksdurchmesser zwischen 1,00 m und 5,00 m ausführen. Soll das Rührwerk nach oder während dem Abziehen des Saftes das Absetzen von Trestern an flachen Wandteilen verhindern oder derartige Trester in den Bereich der Austragschnecke befördern, so wird das Rührwerk mit einer etwas höheren Drehzahl von mindestens 10 Umdrehungen pro Minute angetrieben.

Die Behälter und die in ihnen eingebauten Teile können aus Stahl, insbesondere aus korrosionsfestem Edelstahl oder einem geeigneten Kunststoff hergestellt sein. Die Vorder- und Rückwand der Behälter wird aus Stabilitätsgründen etwas vorgewölbt ausgebildet. Diese Wölbung ist der Einfachheit halber in Fig. 2 nicht dargestellt.

In Fig. 6 ist ein Teil einer Ausführungsform eines liegenden Behälters mit gewölbten Stirnflächen 52 dargestellt. Die Ablaufrinne 50 erstreckt sich über die Verbindungsstelle zwischen dem zylindermantelförmigen Teil 51 und der gewölbten Stirnfläche 52 hinaus und weist an ihrem Ende einen Abschluß, z. B. einen Schieber oder dergleichen, auf. Damit sich in dem Bereich 53 beim Entleeren kein Trester absetzt, weist die Rührwerkswelle 16 im Bereich der gewölbten Stirnwand zwei gegebenenfalls zusätzliche Rührflügel 54 auf, deren vorderes Ende dem Verlauf der Innenwand der Stirnfläche 52 angepaßt ist und das wiederum Abstreifer 55 aus elastischem Werkstoff trägt. Das wandseitige Ende des Abstreifers 55 oder des Rührflügels 54 verläuft schräg zur Ebene der Rührwerkswelle 16, so daß die Trester bei entsprechender Drehrichtung in Richtung der Rührwerkswelle 16 nach innen in einen Bereich gefördert werden, bis zu dem die vom zylindermantelförmigen Teil 51 zur Ablaufrinne 50 führende Öffnung 56 reicht.

Bei der Ausführungsform nach Fig. 1 ist der Übergang zwischen den Seitenwänden der Ablaufrinne 5 und der angrenzenden Behälterwand gewölbt vorgesehen. Bei Ausführungsformen der Erfindung können jedoch die unten durch ein kreissegmentförmiges Wandstück miteinander verbundenen Seitenwände der Ablaufrinne 5 etwa senkrecht verlaufen und unter Bildung einer Ecke an die Behälterwand 4 anschließen. Diese Ausführungsform ist verhältnismäßig einfach herzustellen und wegen der Ecke sehr stabil. Selbstverständlich können auch alle Zwischenstufen zwischen einer scharfen Ecke und einem gekrümmten Übergang vorgesehen sein.

**Ansprüche**

1. Liegender tankartiger Behälter zur Behandlung von Weinmaische, insbesondere Gärtank, mit einem um eine zu einer Längsachse parallelen Achse drehbaren, mehrere über die Länge der Rührwerkswelle verteilt und im Abstand voneinander angeordnete Rührflügel aufweisenden Rührwerk, dadurch gekennzeichnet, daß mindestens ein, vorzugsweise ein äußerer, Abschnitt der parallel zur Rührwerksachse verlaufenden Querschnittsfläche der Rührwerksflügel (25) wesentlich breiter als hoch ist.

2. Behälter nach Anspruch 1, dadurch gekennzeichnet, daß die Rührflügel (25) plattenartig ausgebildet sind.

3. Behälter nach Anspruch 1 oder 2, dadurch gekennzeichnet, daß die parallel zur Rührwerkachse verlaufende Querschnittsfläche an den Flügelenden verbreitert ist.

4. Behälter mit kreiszylindrischem Querschnitt nach einem der vorhergehenden Ansprüche, dadurch gekennzeichnet, daß im unteren Bereich des Behälters eine Austragschnecke (6) angeordnet ist.

5. Behälter, der in seinem oberen Teil eine im wesentlichen kreiszylindrische Form hat, nach einem der Ansprüche 1 bis 3, dadurch gekennzeichnet, daß der auch in seinem unteren Bereich größtenteils kreiszylindrische Behälter (1) eine außerhalb der Kreiszylinderfläche liegende Ablaufrinne (5) aufweist.

6. Behälter nach Anspruch 5, dadurch gekennzeichnet, daß in der Ablaufrinne (5) eine Austragschnecke (6) angeordnet ist.

7. Behälter nach einem der vorhergehenden Ansprüche, dadurch gekennzeichnet, daß die Rührflügel bis in die Nähe der Innenwand des Behälters verlängert sind und an ihren Enden bis zur Innenwand reichende Abstreifer aus elastischem Werkstoff tragen.

8. Behälter nach einem der Ansprüche 1 bis 6, dadurch gekennzeichnet, daß zwei auf der Rührwerkswelle um den gleichen Winkel gegeneinander versetzt angeordnete Flügel an ihren Enden durch einen Steg verbunden sind, der einen bis zur Innenwand reichenden Abstreifer aus elastischem Werkstoff trägt.

9. Behälter nach einem der vorhergehenden Ansprüche, dadurch gekennzeichnet, daß der Behälter (1) im wesentlichen kreiszylinderisch ist und daß die Drehachse (Welle 16) des Rührwerks (15) unterhalb der Symmetrieachse (20) des Behälters angeordnet ist.

10. Behälter nach einem der vorhergehenden Ansprüche, dadurch gekennzeichnet, daß die Rührflügel um 180° gegeneinander versetzt angeordnet sind.

11. Behälter nach einem der Ansprüche 1 bis 9, dadurch gekennzeichnet, daß die Rührflügel (25) entlang der Rührwerksachse (16) schraubenlinienartig um insgesamt 360° versetzt angeordnet sind.

12. Behälter nach einem der vorhergehenden Ansprüche, dadurch gekennzeichnet, daß die Rührwerksflügel (28, 29) im Bereich ihrer freien Enden abgebogen oder abgekantet sind.

13. Behälter mit gewölbten Stirnwänden nach einem der vorhergehenden Ansprüchen, dadurch gekennzeichnet, daß auf der Rührwerkswelle (16) mindestens ein einen ringförmigen Abschnitt (53) der gewölbten Stirnwand überstreichender Rührflügel (54) befestigt ist.

14. Behälter nach Anspruch 13, dadurch gekennzeichnet, daß der Rührflügel (54) an seinem stirnwandseitigen Ende einen Abstreifer (55) trägt.

15. Behälter nach Anspruch 13 oder 14, dadurch gekennzeichnet, daß das stirnwandseitige Ende des Rührflügels (54) schräg zu einer die Rührwerksachse enthaltenden Radialebene angestellt ist.

## Claims

1. A horizontal tank-type container for the processing of wine grape must, particularly a fermentation tank, including an agitator rotatable about an axis parallel to the longitudinal axis of the tank and having a plurality of longitudinally spaced agitator arms disposed along the full length of the agitator shaft, characterized in that the agitator arms (25) are of a stiff structure and that at least one, preferably an outer, section of the cross sectional area of the agitator arms (25) parallel to the agitator axis is wider than high.

2. Container according to claim 1, characterized in that the agitator arms (25) are blade-shaped.

3 Container according to claim 1 or 2, characterized in that the cross-sectional area of the agitator blades extending parallel to the agitator axis is wider at the tip of the blade than the section between agitator shaft and blade tip.

4. Container having a circular cylindrical cross section according to one of the proceeding claims, characterized by a discharge screw (6) installed in the bottom portion of the container.

5. Container having an upper portion of substantially circular cylindrical shape, according to claim 1 to 3, characterized in that also the lower portion of the container (1) is of a largely circular cylindrical shape and is provided with a discharge drain (5) located outside the cylindrical area.

6. Container according to claim 5, characterized in that a discharge screw (6) is installed in the discharge drain (5).

7. Container according to one of the proceeding claims, characterized in that the agitator blades extend up into close proximity of the interior wall surface of the container and at their tips are provided with scrapers of an elastic material to thereby enable said blade tips to extend clear up to the inner wall surface.

8. Container according to one of claims 1 to 6, characterized in that two agitator blades disposed on the agitator shaft and pitched at the same angle to each other are connected at their tips by a web having attached thereto a scraper made of an elastic material to extend clear up to the inner wall surface.

9. Container according to one of the proceeding claims, characterized in that the container (1) is of a substantially circular cylindrical form, and that the axis of rotation (shaft 16) of the agitator (15) is located below the symmetry axis (20) of the container.

10. Container according to one of the proceeding claims, characterized in that the agitator blades are oriented at an angle of 180° to each other.

11. Container according to one of claims 1 to 9, characterized in that the agitator blades (25) are arranged in a helix along the agitator shaft (16) and are offset to each other by a total of 360°.

†2. Container according to one of the proceeding claims, characterized in that the free ends of the agitator blades (28, 29) are curved or angularly bent.

13. Container having curved front walls according to one of the proceeding claims, characterized in that at least one agitator blade (54) is mounted on the agitator shaft (16) to sweep over an annular section (53) of the curved front wall.

14. Container according to claim 13, characterized in that said agitator blade (54) is provided on its end facing the fro  wall with a scraper (55).

15. Container accoraing to claim 13 or 14, characterized in that the end of the agitator blade (54) (54) facing the front wall is oriented obliquely with respect to a radial plane in which the agitator axis is located.


**Revendications**


1. Réservoir horizontal en forme de cuve pour le traitement du moût de raisin, en particulier cuve à fermentation, comportant un agitateur pouvant tourner autour d'un axe parallèle à un axe longitudinal et présentant plusieurs pales d'agitateur réparties sur la longueur de l'arbre d'agitateur et disposées à une certaine distance l'une de l'autre, caractérisé en ce qu'au moins une portion, de préférence une portion extérieure de la section des pales d'agitateur (25) prise parallèlement à l'axe de l'agitateur est sensiblement plus large que haute.

2. Réservoir selon la revendication 1, caractérisé en ce que les pales de l'agitateur ont la forme de plats.

3. Réservoir selon la revendication1 ou selon la revendication 2, caractérisé en ce que la section prise parallèlement à l'axe de l'agitateur est élargie aux extrémités des pales.

4. Réservoir de section cylindrique circulaire selon l'une des revendications précédentes, caractérisé en ce que dans la zone inférieure du réservoir est disposée une vis d'évacuation (6).

5. Réservoir ayant dans sa partie supérieure une forme sensiblement cylindrique circulaire, selon l'une des revendications 1 à 3, caractérisé en ce que le réservoir (1) également cylindrique circulaire sur la plus grande partie de sa zone inférieure présente une goulotte de vidange (5) en dehors de sa surface cylindrique circulaire.

6. Réservoir selon la revendication 5, caractérisé en ce que dans la goulotte de vidange (5) est disposée une vis d'évacuation (6).

7. Réservoir selon l'une des revendications précédentes, caractérisé en ce que les pales d'agitateur sont prolongées jusqu'au voisinage de la paroi interne du réservoir et portent à leurs extrémités des racleurs en matériau élastique qui atteignent jusqu'à la paroi interne.

8. Réservoir selon l'une des revendications 1 à 6, caractérisé en ce que deux pales disposées sur l'arbre de l'agitateur, décalées du même angle l'une par rapport à l'autre, sont reliées à leurs extrémités par une barrette qui porte un racleur en matériau élastique atteignant jusqu'à la paroi interne.

9. Réservoir selon l'une des revendications précédentes, caractérisé en ce que le réservoir (1) est essentiellement de forme cylindrique circulaire ; et en ce que l'axe de rotation (arbre 16) de l'agitateur (15) est disposé en-dessous de l'axe de symétrie (20) du réservoir.

10. Réservoir selon l'une des revendications précédentes, caractérisé en ce que les pales de l'agitateur sont disposées décalées de 180° l'une par rapport à l'autre.

11. Réservoir selon l'une des revendications 1 à 9, caractérisé en ce que les pales (25) de l'agitateur sont disposées le long de l'axe de l'agitateur (16) à la façon d'une hélice, décalée au total de 360°.

12. Réservoir selon l'une des revendications précédentes, caractérisé en ce que les pales de l'agitateur (28, 29) sont cintrées ou en ligne brisée dans la zone de leurs extrémités libres.

13. Réservoir à parois frontales bombées selon l'une des revendications précédentes caractérisé en ce que sur l'arbre d'agitateur (16) est fixée au moins une pale (54) qui s'étend sur une portion (53) en forme d'anneau de la paroi frontale bombée.

14. Réservoir selon la revendication 13, caractérisé en ce que la pale d'agitateur (54) porte un racleur (55) à son extrémité côté paroi frontale.

15. Réservoir selon la revendication 13 et la revendication 14, caractérisé en ce que l'extrémité côté paroi frontale de la pale d'agitateur (54) est disposée obliquement par rapport à un plan radial contenant l'axe de l'agitateur.

0 056 610

Fig. 1

Fig. 3 a

Fig. 3 b

Fig. 2

Fig. 4

35

36

20

6

49 48 47

16

Fig. 5

55 51

52

54

16

53

55 56 50

Fig. 6

2